# NEW EUROPEAN PATENT SPECIFICATION

(11) **EP 1 423 949 B2**
(45) Date of publication and mention of the opposition decision: **02.12.2009**
(45) Mention of the grant of the patent: 10.01.2007
(21) Application number: 02801622.8
(22) Date of filing: 27.08.2002
(51) Int. Cl.: H04L 12/56

(54) **ROUTER DISCOVERY PROTOCOL ON A MOBILE INTERNET PROTOCOL BASED NETWORK**
ROUTER DISCOVERY PROTOKOLL AUF EINEM MOBILEN INTERNETPROTOKOLL BASIERENDEM NETZ
PROTOCOLE DE DECOUVERTE DE ROUTEUR DANS UN RESEAU MOBILE FONDE SUR UN PROTOCOLE INTERNET

(30) Priority: 06.09.2001 US 317833 P; 05.10.2001 US 972125
(43) Date of publication of application: 02.06.2004
(73) Proprietor: The Boeing Company, Chicago, IL 60606-1596 (US)
(72) Inventor: D'ANNUNZIO, Michael, A., Redmond, WA 98053 (US); SKAHAN, Vincent, D., Jr., Federal Way, WA 98023 (US)
(74) Representative: Steil, Christian
(86) International application number: PCT/US2002/027428
(87) International publication number: WO 2003/033109

(56) References cited:
- S. DEERING: "ICMP Router Discovery Messages" IETF RFC 1256, [Online] September 1992 (1992-09), pages 1-19, XP002240319 Retrieved from the Internet: <URL:http://www.cs.utk.edu/~moore/RFC-PDF/ rfc1256.pdf> [retrieved on 2003-05-07] cited in the application
- D. BRENT CHAPMAN: "Network (In)Security Through IP Packet Filtering" USENIX UNIX, [Online] September 1992 (1992-09), pages 1-14, XP002240320 Retrieved from the Internet: <URL:http://www.deter.com/unix/papers/pack et_filt_chapman.pdf> [retrieved on 2003-05-07]
- BALTATU M ET AL: "Security issues in control, management and routing protocols" COMPUTER NETWORKS, ELSEVIER SCIENCE PUBLISHERS B.V., AMSTERDAM, NL, vol. 34, no. 6, December 2000 (2000-12), pages 881-894, XP004304827 ISSN: 1389-1286
- PAUL S. COSIS: 'L0pht Security Advisory' ICMP ROUTER DISCOVERY ADVISORY 11 August 1999, OPENNET,

## Description

The present invention relates to a method for re-configuring communications between a host, a first router and a second router on a network in the event of a failure of the first router, wherein the host, first router and second router are all operating on an Internet Control Message Protocol, ICMP, Router Discovery Protocol, IRDP, the method comprising the steps of: designating said first router as a primary router by using said IRDP to assign said first router a first preference value which said first router includes in advertisements it sends out to said host on said network; designating said second router as a backup router by using, said IRDP to assign said second router a second preference value which said backup router includes in advertisements it sends out to said host on said network; causing said host to transmit data over said network to said primary router subsequent to receiving an advertisement from said primary router; and in the event said host does not receive an advertisement from said primary router within a predetermined time period, causing said host to recognize an advertisement from said backup router and to treat said backup router as a primary router, and to transmit data to said backup router, whereby said backup router routes said data received from said host over said network to a desired destination.
Such a method for reconfiguring communications is disclosed in "ICMP Router Discovery Messages", issued by S. Deering, IETF RFC 1256, September 92, pages 1-19, XP002240319.

The present invention generally relates to Internet protocol (IP) based networks, and more particularly to a router discovery protocol implemented on a mobile IP-based network which allows a host operating on the network to recognize a back-up router as a default router in the event a predetermined default router should fail. The invention is also directed to a security measure for ensuring that the host only recognizes routers which have been preauthorized to operate on the IP-based network as possible back-up routers.

Internet Control Message Protocol (ICMP) Router Discovery Protocol (IRDP) is an ICMP-based protocol that allows hosts to discover default routers on locally attached networks. This protocol eliminates the need to manually configure a default route on each host operating on the network. If a "default" router on the network fails, the host(s) automatically selects a back-up router and adjusts its/their default routes accordingly. IRDP daemons running on non-routing hosts manipulate only default routes in the host's routing table.

IRDP defines two types of network devices: routers and hosts. IRDP provides two extended ICMP message types: advertisements and solicitations. A router advertises its network address and a receiving host enters the router's address in its routing table to create default IP packet routes. Each router on the network sends "advertisements" at regular time intervals (e.g., seconds). A host can request an immediate advertisement by sending a solicitation over the network. IRDP advertisements are considered valid only for a predefined lifetime (typically __ seconds), If a new advertisement is not seen during this lifetime, the router address is considered invalid and the host (or hosts) removes the corresponding default route from its routing table. The lifetime value is included in the header of every IRDP advertisement and applies to all addresses included in the IP packet.

Each router address further has a preference value associated with it. This value represents a signed 32-bit quantity. The IRDP hosts use the address with the highest preference value to determine which router is to be designated as the "default" router. Routers provide a mechanism to configure this preference value, although it will usually default to "0" if it is not configured to some other value.

In a mobile, Internet protocol (IP) based network having a host and a plurality of routers, it is important to be able to route IP packets transmitted by the host off of the mobile platform to a ground station or to some other off-platform destination in the event that the router which is designated as a "default" router fails. In such an event, if there was no means for allowing the host to reconfigure its routing tables to recognize a different router on the network as the default router, then no data packets could be transmitted from the host over the network if the default router fails. Therefore, it is important to have some mechanism by which the default router setting in the host (or the computing device interfaced to the host) could be changed to designate a different router on the network which was not previously designated as the default router. Such a feature would enable a different router besides the initial default router to be used to route IP packets off of the mobile platform in the event of a failure of the initial default router.

Another concern with the application of the IRDP on a mobile platform IP-based network is the risk of an unauthorized router gaining access to the network and advertising itself as the "most preferred" router, and then capturing any IP traffic from the host on the network. This risk exists because the IRDP makes no provisions for verifying the authenticity of advertisements transmitted by routers operating in accordance with the IRDP. Thus, with direct access to the network, any individual could set up a router advertising itself as the most preferred router and then capture any traffic from the host transmitted on the network. Such a scenario would also permit the machine to be used to perform "man-in-the-middle" style attacks.

In view of the foregoing, there also needs to be some mechanism of a network incorporated on a mobile platform which mitigates or eliminates the risk of a machine operating on the network from advertising itself as the default router and intercepting all network traffic.
This object is achieved by a method as mentioned at the outset, wherein the method further comprises the step of using at least one packet filter with said host to allow said host to accept only advertisements transmitted on said network of predetermined routers known to be operating on said network from Claim 1.

The present invention relates to a mobile, Internet protocol (IP) based network which provides a means for changing the default router on the network in the event of a failure of the default router. The present invention is further directed to a means for preventing a device accessing the network from advertising itself to a host as the default router and therefore intercepting all network traffic.

In one preferred embodiment the present invention implements the Internet Control Message Protocol (ICMP) Router Discovery Protocol (IRDP) on an IP-based network disposed on a mobile platform. The mobile platform may comprise an aircraft, a ship, a train or virtually any other form of vehicle having a plurality of occupants operating computing devices coupled to the network on the platform. With IRDP, each of the routers has a designated "preference" value which is included in advertisements which are transmitted by each router over the network to the host or hosts. The hosts select the router which-is-advertising-the highest priority and uses that router as the default router. Each advertisement also carries a "time to live" value that will allow each host (or hosts) to time out an entry in its routing table if that router should fail and cease transmitting advertisements after its last transmitted advertisement expires. The host can then replace the entry of the failed router with a different router advertising the next highest preference value. This allows more than one router on the network to be configured as the default router in the event the initially configured default router should fail.

In the present invention, it is anticipated that one or more routing devices which may be directly coupled to passenger or occupant seats or stations will be included. For convenience, each one of these routing devices is referred to as a "seat electronics box" (SEB). Each SEB runs the host IRDP function. In one preferred embodiment, a plurality of servers each including a router are also interfaced to the network. In the event one server fails, IRDP allows one of the other servers having the next highest preference value to be configured for use as the default router on the network.

The present invention further implements a security safeguard to eliminate the possibility of a device interfaced to the network advertising itself as the default router and intercepting all network traffic from the host or hosts. This is accomplished by including a filter on each SEB interface which allows each SEB to accept only advertisements from specific servers and/or routers on the network. In one preferred form, the filters comprise packet filters which block all ICMP type 9 and type 10 packets transmitted to it from devices interfaced to the network.

The present invention thus makes use of the well known IRDP while allowing each of the SEBs on a mobile platform to reconfigure its routing tables to designate a new default router in the event a previously defined default router fails, which would prevent any network traffic from leaving the network. The present invention further implements a security safeguard for preventing "man-in-the middle" style attacks by a device interfaced with the network which advertises itself as the most preferred router.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:

Figure 1 is a flowchart of an exemplary network suited for a mobile platform for use with the present invention; and

Figure 2 is a flowchart illustrating the steps in removing a router which is failed as the default router and causing the host to designate a different router as the default router.

The following description of the preferred embodiment(s) is merely exemplary in nature and is in no way intended to limit the invention, its application, or uses.

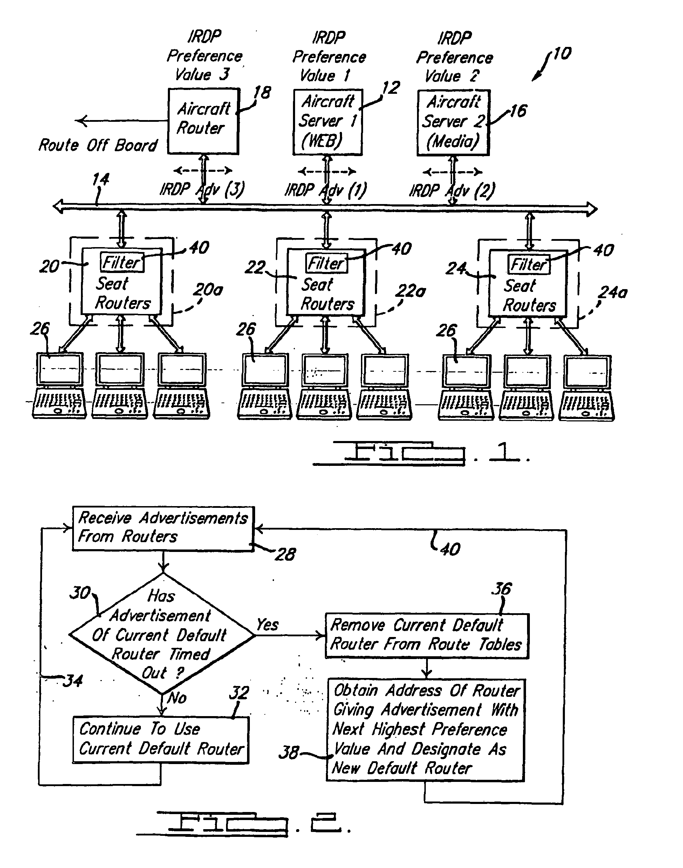

Referring to Figure 1, a network 10 is shown as an example of a network configuration that may be implemented on a mobile platform, and with which the present invention may be used. The network 10 makes use of the Internet Control Message Protocol (ICMP) Router Discovery Protocol (IRDP). A first server is designated as "aircraft server 1" 12 which is interfaced to a communications bus 14 of the network 10. A second server designated "aircraft server 2" 16 is also interfaced to the communications bus 14. In one preferred form, the first aircraft server 12 comprises a web server which also includes a router. The second aircraft server 16 comprises a media server also including a router. The first aircraft server 12 is preferably used for storing Internet web pages. The media server is used for storing other forms of media (i.e., streaming audio and/or video) content which passengers or occupants on a vehicle such as an aircraft, ship or train may wish to view or listen to. An "aircraft router" 18 is also interfaced to the bus 14. The aircraft router 18 is used for routing network traffic off of the vehicle on which the network 10 is located. It will be appreciated that a lesser or greater number of routers could be interfaced to the network 10 if desired.

Referring further to Figure 1, a plurality of additional routers 20, 22 and 24 are also interfaced to the communications bus 14 of the network 10. Each router 20, 22 and 24 in one preferred form comprises a portion of a "seat electronics box" (SEB) 20a, 22a and 24a, respectively. Each SEB 20a, 22a and 24a is used to interface a plurality of computing devices such as laptop computers, personal digital assistants or other personal computing devices 26 to the network 10. Of course, it will also be appreciated that a greater or lesser number of routers 20, 22 and 24 could be included depending upon the overall number of computing devices 26 which may need to be interfaced to the network 10.

Each of the routers 12, 16, 18, 20, 22 and 24 operate in accordance with the IRDP. As such, each router 12, 16 and 18 is caused to send periodic "advertisements" to each of the seat routers 20, 22 and 24. Each of the seat routers 20, 22 and 24 function as a "host" device. Each advertisement includes the network address of the router 12, 16 or 18 as well as a "preference" value and a "time-to-live" value. The preference value is a numerical value which is assigned to the router when the network 10 is initially configured. The preference value is a signed 32-bit quantity that provides a designation of the priority of the router on the network 10. Each seat router 20, 22 and 24 will use the router advertising the highest preference value as its "default" router and will designate that particular router in its routing table as the default router. Each seat router 20, 22 and 24 routes IP packets which it receives from each of the computing devices 26 to the router which it has designated in its routing table as the default router.

The time-to-live value is included in the header of every IRDP advertisement transmitted by each of the routers 12, 16 and 18. This value assigns a lifetime to the advertisement transmitted by the router 12, 16 or 18, which time period may be in the range of milliseconds. If the seat routers 20, 22 and 24 fail to receive an advertisement from the router which is presently recognized as the default router within this time-to-live value, then each of the seat routers 20, 22 and 24 interpret this condition as a sign that there has been a failure with the default router. In this event, each of the seat routers 20, 22 and 24 need to be able to reconfigure their routing tables so as to be able to transmit IP packets from their associated computing devices 26 to a different router on the network 10.

The above-described problem when the default router fails is addressed by the present invention by using the IRDP to enable each seat router 20, 22 and 24 to select the router 12, 16 or 18 having the next highest preference value as the default router. In the exemplary network 10 shown in Figure 1, the aircraft router 18 has the highest preference value (i.e., 3) and is therefore recognized as the default router by each of the seat routers 20, 22 and 24. If this router should fail, then the second aircraft server 16, having a preference value of "2", will be recognized by each of the seat routers 20, 22 and 24 as the default router. If aircraft router 18 and the router of the second aircraft server 16 should both fail, then the IRDP enables the first aircraft server 12 to be recognized as the default router by each of the seat routers 20, 22 and 24.

The above described method of reconfiguring the routing table of each of the seat routers 20, 22 and 24 is illustrated in Figure 2. Each of the seat routers 20, 22 and 24 acting as hosts on the network 10 receive advertisements from router 18 and the routers of the first and second servers, 12 and 16, respectively, as indicated at step 28. Each of the seat routers 20, 22 and 24 determine if the advertisement of the current default router (aircraft router 18) has timed out, as indicated at step 30. If not, each of the seat routers 20, 22 and 24 continue to use the aircraft router 18 as the default router as indicated at step 32, and further continue to receive advertisements, as indicated by loop 34. If the determination made at step 30 indicates that the advertisement from the current default router has timed out, meaning that a subsequent advertisement was not received within the time-to-live value of the previously received advertisement from the default router, then the seat routers 20, 22 and 24 remove the current default router (i.e., aircraft router 18) from their routing tables, as indicated at step 36. Each seat router 20, 22 and 24 then obtains the address of the router providing an advertisement with the next highest preference value (i.e., the router of the second aircraft server 16) and designates that particular router as the new default router, as indicated at step 38. Each of the seat routers 20, 22 and 24 then continue to receive advertisements from the remaining routers operating on the network, as indicated by loop 40.

The present invention further implements a security safeguard to prevent against a device interfaced to the network 10 from advertising itself as the most preferred (i.e., default) router to the seat routers 20, 22 and 24. This safeguard is implemented by including a packet filter on the interface of each SEB 20a, 22a and 24a. This filter is illustrated in simplified form in Figure 1 by filter 40 associated with each SEB 20a, 22a and 24a. This filter blocks all ICMP Type 9 and Type 10 packets and allows each SEB 20a, 22a and 24a to accept only advertisements from predefined routers (i.e., routers having an address known to the host to be a router authorized to operate as such on the network 10) and/or media servers on the network 10. This eliminates the possibility of some device being interfaced to the network 10 and transmitting advertisements with a higher preference value than the current default router in an effort to make each SEB 20a, 22a and 24a recognize it as the default router.

The present invention therefore eliminates the need to manually configure a default route on each host (i.e., seat router 20, 22 and 24) in the event tht the current default router should fail, thus preventing any IP packets from being transmitted off of the network 10. The present invention further eliminates the possibility that a device interfaced to the network 10 is able to advertise itself as the most preferred router, and thus intercept IP packets transmitted by the seat routers 20a, 22a and 24a.

The description of the invention is merely exemplary in nature and, thus, variations that do not depart from the gist of the invention are intended to be within the scope of the invention, as defined in the appended claims.

## Claims

1. A method for re-configuring communications between a host (20-24), a first router (12, 16, 18) and a second router (12, 16, 18) on a network (10) in the event of a failure of the first router (12, 16, 18), wherein the host (20-24), first router (12, 16, 18) and second router (12, 16, 18) are all operating on an Internet Control Message Protocol, ICMP, Router Discovery Protocol, IRDP, the method comprising the steps of:
designating said first router (12, 16, 18) as a primary router (18) by using said IRDP to assign said first router (12, 16, 18) a first preference value which said first router (12, 16, 18) includes in advertisements it sends out to said host on said network (10);
designating (38) said second router (12, 16, 18) as a backup router (16) by using said IRDP to assign said second router (12, 16, 18) a second preference value which said backup router (16) includes in advertisements it sends out to said host on said network (10);
causing said host (20-24) to transmit data over said network (10) to said primary router (18) subsequent to receiving an advertisement from said primary router (18); and
in the event said host (20-24) does not receive an advertisement from said primary router (18) within a predetermined time period, causing said host (20-24) to recognize an advertisement from said backup router (16) and to treat said backup router (16) as a primary router, and to transmit data to said backup router (16), whereby said backup router (16) routes said data received from said host (20-24) over said network (10) to a desired destination,
**characterized by**
using at least one packet filter (40) with said host (20-24) to allow said host to accept only advertisements transmitted on said network (10) of predetermined routers (12, 16, 18) known to be operating on said network (10), wherein the predetermined routers have an address known to the host to be a router authorized to operate as such on the network.

2. The method of claim 1, **characterized by**:
a plurality of said backup routers are provided, each of said backup routers being in communication with said host on said network (10) and each being assigned a preference value; and
further comprising the step of said host using said backup router that has the highest preference value when said primary router fails.

3. The method of claim 1, further comprising the step of configuring said primary router to receive data packets from a plurality of independent computing devices (26).

## Patentansprüche

1. Verfahren zum Rekonfigurieren von Kommunikationen zwischen einem Host (20-24), einem ersten Router (12, 16, 18) und einem zweiten Router (12, 16, 18) in einem Netzwerk (10) für den Fall eines Versagens des ersten Routers (12, 16, 18), wobei der Host (20-24), der erste Router (12, 16, 18) und der zweite Router (12, 16, 18) alle mit einem Internet-Control-Message-Protocol-, ICMP-, Router-Discovery-Protocol, IRDP, betrieben werden, wobei das Verfahren die Schritte aufweist:
Bezeichnen des ersten Routers (12, 16, 18) als primärer Router (18) durch Verwenden des IRDP, um dem ersten Router (12, 16, 18) einen ersten Präferenzwert zuzuweisen, den der erste Router (12, 16, 18) in Ankündigungen einschließt, die er an den Host im Netzwerk (10) aussendet;
Bezeichnen (38) des zweiten Routers als Backup-Router (16) durch Verwenden des IRDP, um dem zweiten Router (12, 16, 18) einen zweiten Präferenzwert zuzuweisen, den der Backup-Router (16) in Ankündigungen einschließt, die er an den Host in dem Netzwerk (10) aussendet;
Veranlassen des Hosts (20-24) dazu, Daten über das Netzwerk (10) an den primären Router (18) nachfolgend zu einem Empfangen einer Ankündigung von dem primären Router (18) zu senden; und
für den Fall, dass der Host (20-24) keine Ankündigung von dem primären Router (18) innerhalb einer vorgegebenen Zeitdauer empfängt, Veranlassen des Hosts (20-24) dazu, eine Ankündigung von dem Backup-Router (16) zu erkennen und den Backup-Router (16) als primären Router zu behandeln, und Daten an den Backup-Router zu senden, wobei der Backup-Router (16) die von dem Host (20-24) über das Netzwerk (10) empfangenen Daten an ein gewünschtes Ziel leitet,
**gekennzeichnet durch**
Verwenden von zumindest einem Paketfilter (40) bei dem Host (20-24), um es dem Host zu ermöglichen, lediglich Ankündigungen zu akzeptieren, die von vorbestimmten Routern (12, 16, 18) in dem Netzwerk (10) gesendet werden, von denen bekannt ist, dass sie in dem Netzwerk (10) betrieben werden, wobei die vorbestimmten Router eine Adresse aufweisen, die dem Host derart bekannt ist, dass ein Router zum Betrieb im Netzwerk als solcher autorisiert ist.

2. Verfahren nach Anspruch 1, **dadurch gekennzeichnet, dass**:
eine Vielzahl von Backup-Routern vorgesehen ist, wobei jeder Backup-Router in Verbindung mit dem Host in dem Netzwerk (10) steht und jedem ein Präferenzwert zugewiesen ist; und
des Weiteren den Schritt umfasst, dass der Host den Backup-Router verwendet, der den höchsten Präferenzwert hat, wenn der primäre Router versagt.

3. Verfahren nach Anspruch 1, das des Weiteren den Schritt eines Konfigurierens des primären Routers aufweist, um Datenpakete von einer Vielzahl von unabhängigen Recheneinrichtungen (26) zu empfangen.

## Revendications

1. Procédé pour re-configurer des communications entre un hôte (20-24), un premier routeur (12, 16, 18) et un deuxième routeur (12, 16, 18) sur un réseau (10) en cas de défaillance du premier routeur (12, 16, 18), dans lequel l'hôte (20-24), le premier routeur (12, 16, 18) et le deuxième routeur (12, 16, 18) opèrent tous selon un Internet Control Message Protocol, ICMP, un Router Discovery Protocol, IRDP, le procédé comprenant les étapes consistant à:
désigner ledit premier routeur (12, 16, 18) comme routeur principal (18) en utilisant ledit IRDP pour assigner audit premier routeur (12, 16, 18) une première valeur de préférence que ledit premier routeur (12, 16, 18) inclut dans les messages qu'il envoie audit hôte sur ledit réseau (10) ;
désigner (38) ledit deuxième routeur (12, 16, 18) comme routeur de secours (16) en utilisant ledit IRDP pour assigner audit deuxième routeur (12, 16, 18) une deuxième valeur de préférence que ledit routeur de secours (16) inclut dans les messages qu'il envoie audit hôte sur ledit réseau (10) ;
forcer ledit hôte (20-24) à transmettre des données sur ledit réseau (10) audit routeur principal (18) après la réception d'un message depuis ledit routeur principal (18) ; et
dans le cas où ledit hôte (20-24) ne reçoit pas de message dudit routeur principal (18) dans une période de temps prédéterminée, forcer ledit hôte (20-24) à reconnaître un message venant dudit routeur de secours (16) et à traiter ledit routeur de secours (16) comme routeur principal, et à transmettre des données audit routeur de secours (16), de sorte que ledit routeur de secours (16) route lesdites données reçues dudit hôte (20-24) sur ledit réseau (10) jusqu'à une destination souhaitée,
**caractérisé par** le fait
d'utiliser au moins un filtre de paquet (40) avec ledit hôte (20-24) pour permettre audit hôte d'accepter seulement les messages transmis sur ledit réseau (10) de routeurs prédéterminés (12, 16, 18) connus pour fonctionner sur ledit réseau (10), les routeurs prédéterminés ayant une adresse dont l'hôte sait qu'il s'agit d'un routeur autorisé à fonctionner en tant que tel sur le réseau.

2. Procédé selon la revendication 1, **caractérisé en ce que**
une pluralité de dits routeurs de secours est prévue, chacun desdits routeurs de secours étant en communication avec ledit hôte sur ledit réseau (10) et chacun se voyant affecter une valeur de préférence ; et
comprenant de plus l'étape dans laquelle ledit hôte utilise ledit routeur ayant la plus grande valeur de préférence quand ledit routeur principal est défaillant.

3. Procédé selon la revendication 1, comprenant de plus l'étape consistant à configurer ledit routeur primaire pour recevoir des paquets de données d'une pluralité de dispositifs informatiques indépendants (26).
